# EUROPEAN PATENT SPECIFICATION

(11) **EP 1 838 743 B1**
(45) Date of publication and mention of the grant of the patent: **22.10.2008**
(21) Application number: 04806837.3
(22) Date of filing: 02.12.2004
(51) Int. Cl.: C08F 230/08, C08F 275/00, C14C 11/00

(54) **AQUEOUS POLYMER DISPERSION USEFUL FOR PREPARING BASE-COAT COMPOSITION FOR EMBOSSED LEATHER**
WÄSSRIGE POLYMERDISPERSION ZUR VERWENDUNG BEI DER HERSTELLUNG EINER BASISBESCHICHTUNGSZUSAMMENSETZUNG FÜR GEPRÄGTES LEDER
DISPERSION AQUEUSE DE POLYMÈRE POUVANT ÊTRE EMPLOYÉE DANS LA PRÉPARATION DE FORMULES DE COUCHE DE BASE POUR CUIR IMPRIMÉ

(43) Date of publication of application: 03.10.2007
(73) Proprietor: Cray Valley Italia S.R.L., 42022 Boretto (IT)
(72) Inventor: SAIJA, Leo, I-42011 Bagnolo in Piano (IT); LUGLI, Mario, I-42042 Fabbrico (IT)
(74) Representative: Killis, Andréas
(86) International application number: PCT/IT2004/000672
(87) International publication number: WO 2006/059352

(56) References cited:
- EP-A- 0 578 229
- EP-A- 1 172 412
- DE-A1- 19 545 689
- US-A- 5 214 095
- US-B1- 6 541 566

## Description

The present invention relates to aqueous dispersions of polymers for the finishing treatment of leather. The invention specifically relates to dispersions useful for preparing base-coat composition for embossed leather, and more particularly for coating automotive leather, the said leather coating having a good cold crack resistance.

The films obtained from aqueous polymeric dispersions according to the present invention confer on the treated leather, an excellent compromise of performances in terms of mechanical resistance, low discoloration, embossing quality, intercoat adhesion and softness.

It is known, from the prior art, that the technique of finishing a leather, known as finishing, involves the use of polyurethane dispersions which are capable of forming films, which give a very good combination of properties to the end manufactured article but which exhibit the disadvantage of being too expensive.

To overcome this disadvantage of the polyurethane dispersions, several solutions are already proposed in the prior art and more particularly in the field of aqueous polymeric dispersions for aqueous coatings.

· EP 1 160 335 discloses the use of a core-shell acrylic dispersion crosslinked with a divalent metal oxide, hydroxide or carbonate, or its salts or complex, having a low Tg core, functionalised with a carboxylic acid monomer, and a shell having a Tg higher than 20°C, polymerized in the presence of a chain transfer agent such as a mercaptan. This composition reduces the stiffness while improving the embossability of leather. However, this solution is inadequate in particular regarding the intercoat adhesion and low discoloration.

· EP 1 208 117 discloses the use of an aqueous dispersion of acrylic polymers, comprising an unsaturated silane monomer, suitable for the finishing treatment of leather. This dispersion is exempted from (meth)acrolein and confers to the treated leather a good combination of softness, resistance to water and adhesion to the leather substrate. However, this prior art document does not disclose or teach the presence of any specific multivalent metal compound being essential mean of the present invention for the achievement of a satisfactory compromise of performances, in particular in terms of scrub resistance, absence of yellowing or of discoloration and higher embossing quality.

None of these prior art documents does provide a satisfactory solution to the problem of the protection of leather, and particularly to the protection of automotive leather, comprising an excellent compromise in terms of higher mechanical resistance including flexural and scrub resistance, resistance to embossing process, intercoat adhesion, colorless coating, softness and high cold crack resistance, even at low temperatures.

The present invention overcomes the disadvantages of the compositions of the prior art. The specific aqueous polymeric dispersions of the present invention are particularly suitable for the preparation of a base-coat composition for leather which satisfactorily meet the following needs and requirements:
- an excellent intercoat adhesion on leather substrates, more particularly at low temperature, characterized by a good wettability of the polymer surface,
- a good resistance to the embossing process, characterized by a high printability quality during a printing process,
- a good profile of mechanical properties characterized by a good flexural resistance and scrub resistance, while keeping a high cold crack resistance at temperature lower than -10°C, and even at temperature lower than -15°C,
- a really colorless protective coating, in terms of yellowing and discoloration of the finished leather article,
- a high softness, in terms of hand of the leather article, after it has been embossed and "drummed" for 12 hours.

The first subject-matter of the present invention is an aqueous polymeric dispersion.

The second subject-matter relates to a process for the preparation of the said polymeric dispersion.

The invention does also relate to a coating composition for leather treatment comprising at least one aqueous polymeric dispersion according to the invention and to the use of such a dispersion for leather treatment.

Finally, the invention concerns a leather article treated by a dispersion according to the invention.

More specifically, the first subject-matter of the invention is an aqueous polymeric dispersion comprising polymeric particles bearing silane and carboxylic groups, the said carboxylic groups being possible to be either in the form of acid or of its salts with monovalent cation, the said polymer particles being crosslinked by the presence of at least one multivalent metal compound selected from multivalent metal oxides, hydroxides or salts or complexes, and in that the Tg of the said polymer being not higher than 0°C, preferably not higher than -10°C, and more preferably from -20 to -50°C.

It must be specified that the said aqueous polymeric dispersion may be among others a pure acrylic dispersion involving acrylic and/or methacrylic or vinylic-acrylic dispersion or a styrene-acrylic dispersion.

As it concerns the valency of the said multivalent metal, preferably it should be higher than 1 and more preferably 2. Examples of such multivalent metal are zinc, calcium, magnesium, titanium, aluminium and zirconium with preferred ones being zinc and calcium more preferably zinc. Suitable metal compounds of these multivalent metals, for crosslinking the said aqueous polymeric dispersion are selected from metal oxides, like zinc oxide or calcium oxide or hydroxides, like zinc and calcium hydroxides or carbonates, like zinc and calcium carbonates or complexes of these metals with organic or inorganic ligands such as zinc ammonium carbonate.

Two possible cases may be considered in the definition of the Tg of the said polymer. In the first case where there is only a polymeric phase then the said Tg of the said polymer is considered to be the effective measurable Tg, while in the second case where the particle has a core/shell structure with two separated polymeric phases then the said Tg will be the calculated virtual Tg value obtained by the weighted average between Tg₁, the effective Tg of the first phase and Tg₂ the effective Tg of the second phase.

Consequently, the polymeric particles of the dispersion of the present invention may have a structural morphology with a structure of core / shell or they may have an homogeneous structure of a non structural latex. In the case of a structure of core/shell type, the Tg of the core is from -60 to -20°C, preferably from -50 to -30°C and that of the shell from 50 to 150°C, preferably from 70 to 120°C. The weight ratio core/shell may be of 70/30 to 95/5.

Concerning the silane groups borne by the polymer particles of the invention they can be selected among alkoxysilanes, with alkoxy preferably in C₁-C₁₀, and more preferably in C₂-C₅. More specifically, preferred alkoxysilanes are selected from : tri-ethoxysilane, tri-isopropoxysilane, tri-methoxysilane, tri-(2-methoxyethoxy)silane, methyl dimethoxy silane, methyl diethoxy silane.

These silane groups may be issued from at least one α,β-ethylenically unsaturated monomer or oligomer further bearing at the least one silane group. Preferably, these monomers or oligomers bear besides silane group at least one ethylenic unsaturation which may be selected from : acrylic, vinylic, allylic. As example of acrylic monomer, we may cited methacryloxypropyl triisopropoxysilane, and as vinylic one vinyl trimethoxysilane.

The silane groups as defined according to the invention are suitable for interacting in the crosslinking process during the coalescence phase with the formation of bonds, preferably covalent bonds. Consequently, the use of monomers or oligomers bearing silane groups can contribute to improve the intercoat adhesion of the treated leather.

Suitable monomers or oligomers according to this invention bearing silane group may be represented by the following general formula (I) :

GH₂=C(R)-Si(OR')ₙR"ₘ or CH₂=C(R)-CO-O-R"-Si(OR')ₙR"ₘ (I)

where:
n is an integer equal to 2 or 3,
m is an integer equal to 0 or 1,
m + n = 3,
R = H or CH₃,
R' = C₁-C₁₀ and preferably C₂-C₅ alkyl group, which may be linear or branched
   where possible,
R" = C₁-C₁₀ and preferably C₂-C₅ alkyl or alkylene group, depending on its position (alkyl if terminal, alkylene if not terminal), which may be linear or branched where possible.

Preferably, the monomers or oligomers bearing silane groups are present in the monomeric mixture in an amount corresponding to a weight ratio of 0.05 to 4 parts and more preferably of 0.1 to 2 parts for 100 parts of the total amount of monomers.

It should be specified that in the present invention as defined, the terms "monomeric mixture" and "amount of monomers" should be generally interpreted as including oligomers when present in the said monomeric mixture.

Concerning the carboxylic groups borne by the polymeric particles, their final form may be either as carboxylic acid or as a salt of this acid with monovalent cations, which cations may be of inorganic origin such as alkali metal cations or ammonium or cations of organic quaternary ammonium from tertiary amines. The acid or salt form may depend firstly on the initial form (initial acid or initial salt) of the carboxylic group borne by the selected monomer. A second possibility is by modifying (neutralizing) after polymerization the carboxylic acid group to the corresponding salt by using the adequate neutralizing agent corresponding to the said monovalent cation. Consequently, the final form of the carboxylic group will depend also from the final pH of the said aqueous dispersion.

The carboxylic acid group of the polymer particles can be issued from at least one ethylenically unsaturated monomer or oligomer bearing at least one carboxylic acid group or its corresponding anhydride or salt with a monovalent cation as defined above. More particularly, the said monomers can be selected from : methacrylic and acrylic acid, fumaric and maleic acid, itaconic acid, crotonic acid, methyl hemi-ester of itaconic acid, methyl hemi-ester of fumaric acid, butyl hemi-ester of fumaric acid or their corresponding salts with monovalent cations or where possible their corresponding anhydrides. Among preferred monomers of this type are : itaconic and (meth)acrylic acid.

The said ethylenically unsaturated monomer or oligomer bearing at least one carboxylic acid group or its corresponding anhydride or salt with monovalent cation is present in the monomeric mixture at a weight ratio of 0.5 to 10 parts, and preferably from 2 to 7 parts, for 100 parts of the total amount of monomers. As a consequence, the resulting acid value in equivalent of the final polymer of the dispersion of the invention, before ionic crosslinking, can vary from 5 to 100, and preferably from 10 to 50.

The term "equivalent acid" comprises the acid and salt forms of both carboxylic groups and phosphated groups.

In a more specific embodiment of the invention, the polymer particles may further bear at least a phosphated group selected from phosphates or phosphonates or phosphinates.

The said phosphated group can be issued from at least one ethylenically unsaturated monomer or oligomer bearing at least one phosphated group selected from phosphates or phosphonates or phosphinates as defined according to the following formulas :
- phosphate type : 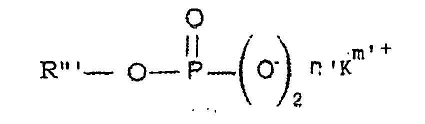
- phosphonate type : 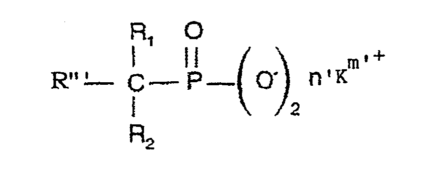
- phosphinate type : 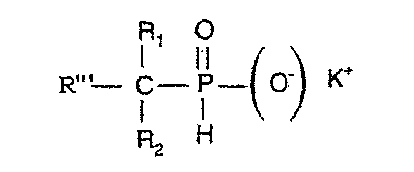
wherein,
R"' comprises an ethylenic unsaturation which may be acrylic, vinylic or allylic, and where K⁺ is a monovalent cation, and preferably H⁺ or metallic cation or ammonium, and n' and m'are each equal to 1 or 2, so that n' x m' = 2;
R₁ and R₂, same or different, are selected from H, CH₃.
For example, K can be an alkaline metal or an ammonium cation.

Examples of phosphated monomers may comprise : alkoxylated methacrylate phosphates, vinyl phosphonic acid, hydroxyethyl methacrylate phosphate monoester and bi-ester, alkylmethacrylate phosphate monoester.

Preferred phosphated monomer is : hydroxyethyl methacrylate phosphate monoester.

The said ethylenically unsaturated monomer bearing at least one phosphated group is present in the monomeric mixture at a weight ratio of 0.1 to 5 parts, and preferably from 1 to 3 parts for 100 parts of the total amount of monomers.

The said carboxylic, silane and phosphated groups are preferably linked to the polymeric backbone by covalent bonds resulting from the polymerization of the corresponding monomers or oligomers bearing the said groups.

According to a specific embodiment, the dispersion of the invention can be obtained by emulsion polymerization of a monomeric mixture comprising additionally, besides the said monomers bearing carboxylic groups and the said monomers bearing silane group as defined according to the invention, and possibly the said monomers bearing phosphated group as defined according to the invention, at least one ethylenically unsaturated monomer selected from : methacrylic esters, allylic esters, vinylic esters, vinyl aromatic monomers, (meth) acrylonitrile.

More specifically, these additional monomers are monoethylenically unsaturated non-ionic monomers, such as for example the following ones : (meth)acrylic esters including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, styrene or substituted styrene derivatives, (meth)acrylonitrile and vinyl acetate or other vinyl esters.

More particularly, the monomeric mixture for preparing the dispersion according to the present invention the said monomeric mixture may further comprise at least one monomer bearing at least two polymerizable ethylenic unsaturations.

Examples of such polymerizable ethylenic unsaturations (at least two) may be acrylic, vinylic or allylic ones, with as examples of suitable monomers which may be cited : (tri)ethyleneglycol di(meth)acrylate or allyl methacrylate.

The said additional monomer bearing at least two polymerizable ethylenic unsaturations may be present at a weight ratio of 0.05 to 2 parts for 100 parts of the total amount of monomers.

The composition and type of the monomers or oligomers in the monomeric mixture will be selected so that the essential Tg and the functionality requirements for the final polymer as defined above are fully fulfilled.

The said final dispersion of the invention is obtainable by a process comprising besides the emulsion polymerization step of a specific monomeric mixture as defined above, an additional and subsequent step of cross-linking of the polymeric particles by adding at least one multivalent metal oxide, hydroxide or its salt or complex. The said multivalent metal oxide, hydroxide or its salt or complex, is added in an amount corresponding to a molar ratio multivalent metal/total equivalent acid from carboxylic and possibly phosphated groups from 0.05 to 2.00, and preferably from 0.1 to 1. In fact, this molar ratio takes into account the total equivalent acidity resulting from carboxylic groups or phosphated groups and their salts. Preferably, the metal compound is added in the form of an aqueous slurry or of an aqueous solution in water, optionally with an added polymeric dispersant such as, for example a low molecular weight homopolymer or copolymer of (meth)acrylic acid. The said transition metal oxide, hydroxide, or its salts or complex, may be added in a water-soluble form such as a solution of zinc ammonium carbonate before or after the formation and the neutralization of the emulsion polymer. The final pH of the dispersion is between 7 and 8.5.

The size of the particles of the dispersion varies from 70 to 150 nm, and preferably from 80 to 120 nm.

The dry extract obtained for the dispersion is between 30 and 50%, and preferably between 30 and 45%.

The metal oxide, hydroxide or its salt such as carbonate or complex, is capable of interacting with acid equivalent groups (carboxylic or phosphated) during the coalescence phase leading to an ionic crosslinking process by the formation of ionic bonds. The use of the said metal compounds contributes to improve the embossability of leather and to significantly lower the yellowing and discoloration of the finished leather article.

The oxides, hydroxides and carbonates of zinc, calcium, magnesium, titanium, aluminium, and zirconium are preferred for low cost, low toxicity, and low color in the dried coating. Zinc oxide is the more preferred.

A second subject of the present invention concerns a process for preparing the said dispersion of the invention. The said process comprises besides the emulsion polymerization step of the said monomeric mixture an additional and subsequent step of crosslinking of the resulting polymer particles by adding at least one multivalent metal oxide, hydroxide or its salt or complex, preferably in the form of an aqueous slurry or of an aqueous solution as specified above.

This process comprises at least the following essential steps :
i) emulsion polymerization of a monomeric mixture comprising :
   a) at least one ethylenically unsaturated monomer bearing at least one silane group as defined according to the invention,
   b) at least one ethylenically unsaturated monomer bearing at least one carboxylic group as defined according to the invention,
ii) crosslinking of the resulting polymer particles by adding in the said emulsion of step i) at least one multivalent metal oxide, hydroxide or its salt or complex in the form of slurry or aqueous solution.

More specifically it comprises the following steps :
i) emulsion polymerization of a first monomeric mixture comprising :
   a) at least one ethylenically unsaturated monomer bearing at least one silane group as defined according to the invention,
   b) at least one ethylenically unsaturated monomer bearing at least one carboxylic group as defined according to the invention,
ii) addition and emulsion polymerization of a second monomeric mixture, different in composition from that of step i), until having complete conversion of the total of monomers,
iii) crosslinking of the resulting polymer particles of the final emulsion resulting from step ii) by adding at least one multivalent metal oxide, hydroxide or its salt or complex at a molar ratio of multivalent metal/total equivalent acid from carboxylic and possibly phosphated groups from 0.05 to 2.00, and preferably from 0.1 to 1.

In case of a core-shell structure, the specific process comprises at least the following stages :
i) polymerization in at least one stage of a monomeric mixture as defined according to the invention,
ii) polymerization in at least one stage of at least one second monomeric mixture as defined according to the invention, it being possible for this second monomeric mixture to give a polymer with a different Tg value from that of stage i).

During a first stage, the nucleation of the polymer particles can be carried out in situ by carrying out a batch introduction of a small proportion of the monomers used for the complete process and of a sufficient amount of a radical initiator or of a seed prepared beforehand. It is also possible to directly initiate the second stage without passing through a nucleation stage.

The second stage consists in running in semi-continuously a solution or a pre-emulsion of monomers and a solution of radical initiator. This second stage can furthermore be subdivided into several sub-stages during the feeding to the reaction medium of a mixture of monomers.

The third stage of the process relates to the reduction of the residual monomers in the final composition. This is achieved by semi-continuously feeding in various solutions of radical initiators in the presence or absence of activator which are reducing agents as described above.

The reaction mixture is subsequently cooled during the final stage of the process, until reaching room temperature, when the additives and neutralizing agent are also added.

Another subject-matter of the invention is a coating composition for leather treatment comprising at least one dispersion as defined according to the invention or obtainable by a process as defined according to the invention. This composition can be a base coat composition for embossed leather. More particularly, the said composition can be a composition for automotive leather application, and preferably a composition for a treatment of leather with cold crack resistance at a temperature lower than -10°C, and preferably lower than -15°C.

A typical coating composition for leather treatment may comprise :
a) a dispersion according to the invention,
b) at least one wax emulsion, the said wax being selected from polyethylene wax, polyethylene oxidized wax, carnauba wax,
c) at least organic or inorganic pigment, such as TiO₂ or carbon black,
d) at least one associative thickener, such as polyurethane type.

A typical solids content of this coating composition could be from 25% to 35%.

An additional subject-matter of the invention is the use of the dispersion of the invention, or obtainable by a process as defined according to the invention, for the treatment of leather, and particularly for the treatment of embossed leather, and more particularly for the treatment of automotive leather, in the form of a base coat composition. More particularly, the said treatment is for leather with cold crack resistance to a temperature lower than -10°C, and preferably lower than -15°C.

A final subject-matter of the present invention is a leather treated with at least one composition of treatment as defined according to the invention or according to the use as defined according to the invention. More particularly, it is noted that the treated leather, embossed or for automotive, has a good cold crack resistance even at a temperature lower than -15°C.

By way of illustration of the invention, the following examples demonstrate, without any limitation, the performances of the dispersions and coatings obtained.

### Preparation and characterization of the Polymer dispersion :

### Example 1 (invention) :

In a glass reactor, equipped with condenser, stirrer, temperature control system and inlet for nitrogen, initiator solutions and pre-emulsion feeding, 2694 g of deionized water are added together with 16.3 g of sodium lauryl sulphate. In another vessel, equipped with stirrer (pre-emulsifier) an emulsion is prepared, constituted of 1676 g of deionized water, 19.4 g of sodium lauryl sulphate, 139.1 g of methacrylic acid, 1920 g of ethyl acrylate, 898 g of butyl acrylate, 12 g of methacryloxy propyl triisopropoxy silane and 3.0 g of triethyleneglycol dimethacrylate.

When the reactor reaches the temperature of 50°C, 150 g of the previously prepared monomer pre-emulsion are transferred therein and in sequence 6.2 g of sodium persulphate 10% solution, 20 mg of ferrous sulphate and 2.5 g of sodium metabisulphite 10% solution.

When the polymerization starts, the temperature inside the reactor will increase of about 10°C (exothermic peak). One minute after the reaching of the exothermic peak, the remaining part of monomer emulsion together with 200 g of sodium persulphate 5% solution, and 12.5 g of sodium metabisulphite 10% solution, are added at a constant rate, for 4 hours to the reactor, taking care of maintaining the reactor content at temperature of 60°C. Then 5.5 g of terbutylhydroperoxide are dissolved in 35 g of deionized water and 3.2 g of sodium formaldehyde sulphoxylate dissolved in 77 g of water, are added at a constant rate, in 75 minutes. The reaction mixture is maintained at 60°C for an additional half an hour, and then it is cooled at a temperature of 35°C and a slurry of 29.3 g of zinc oxide in 187 g of deionized water is added. After an additional half an hour, the reactor content is brought to a pH of 8.0 with the addition of 64 g of a 28 degrees Bé ammonia (approximately 31% by weight) and cooled at room temperature. The obtained dispersion filtered on a 36 Mesh, is
characterized by a dry residue of 37.8 % (1h at 105°C), a pH of 8.0, a content of precoagulum lower than 200 ppm on a 275 Mesh net and a viscosity of 44 mPa.s (Brookfield RVT at 100 rpm and 23°C).

### Example 2 (comparative) :

The procedure described in Example 1 is followed, without adding the 29.3 g of zinc oxide.

The obtained dispersion filtered on a 36 Mesh, is characterized by a dry residue of 37.4 % (1h at 105°C), a pH of 8.1, a content of precoagulum lower than 200 ppm on a 275 Mesh net and a viscosity of 40 mPa.s (Brookfield RVT at 100 rpm and 23°C).

### Example 3 (comparative) :

The procedure described in Example 1 is followed, without adding the 12 g of methacryloxypropyl triisopropoxy silane in the monomer pre-emulsion.

The obtained dispersion filtered on a 36 Mesh, is characterized by a dry residue of 37.6% (1h at 105°C), a pH of 7.8, a content of precoagulum lower than 200 ppm on a 275 Mesh net and a viscosity of 38 mPa.s (Brookfield RVT at 100 rpm and 23°C).

### Example 4 (invention) :

In a glass reactor, equipped with condenser, stirrer, temperature control system and inlet for nitrogen, initiator solutions and pre-emulsion feeding, 2754 g of deionized water are added together with 26.8 g of sodium lauryl sulphate. In another vessel, equipped with stirrer (pre-emulsifier) an emulsion is prepared, constituted of 1170 g of deionized water, 10.0 g of sodium lauryl sulphate, 75.2 g of itaconic acid, 2408 g of butyl acrylate, 50.2 g of hydroxy ethyl methacrylate phosphate acid (monoester) and 3.0 g of triethyleneglycol dimethacrylate.

When the reactor reaches the temperature of 50°C, 155 g of the previously prepared monomer pre-emulsion are transferred therein and in sequence 24.8 g of sodium persulphate 10% solution, 40 mg of ferrous sulphate and 10.8 g of sodium metabisulphite 10% solution.

When the polymerization starts, the temperature inside the reactor will increase of about 10°C (exothermic peak). One minute after the reaching of the exothermic peak, the remaining part of monomer emulsion together with 200 g of sodium persulphate 5% solution, and 40.0 g of sodium metabisulphite 10% solution, are added at a constant rate, for 4 hour to the reactor, taking care of maintaining the reactor content at temperature of 60°C. After 3 hours from the feeding start, 3.8 g of methacryloxypropyl triisopropoxy silane are added to the monomer pre-emulsion. When the feeding of the remaining pre-emulsion is over, the reactor content is maintained at a 60°C for an additional half an hour. Then a second monomer pre-emulsion, composed by 290 g of deionized water, 2.1 g of sodium lauryl sulphate, 410 g of methyl methacrylate, and 6.4 g of methacryloxypropyl triisopropoxy silane, together with 2 g of terbutyl hydroperoxide dissolved in 12 g of deionized water, and 1.5 g of sodium formaldehyde sulphoxylate dissolved in 35.7 g of deionized water, are added at a constant rate in 20 minutes in the reactor, taking care of maintaining the reactor content at a temperature of 60°C. After the end of the second pre-emulsion feeding, 7.8 g of terbutyl hydroperoxide dissolved in 52.2 g of deionized water and 6.4 g of sodium formaldehyde sulphoxylate dissolved in 153.6 g of water, are added at a constant rate, in 75 minutes. The reaction mixture is maintained at 60°C for an additional half an hour, at the end of which it is cooled to the temperature of 35°C and a slurry of 29.3 g of zinc oxide in 187 g of deionized water is added. After an additional half an hour the reactor content is bring to a pH of 8.0 with the addition of 65 g of a 28 degrees Bé ammonia and cooled at room temperature. The obtained dispersion filtered on a 36 Mesh, is characterized by a dry residue of 37.3% (1h at 105°C), a pH of 8.0, a content of precoagulum lower than 200 ppm on a 275 Mesh net and a viscosity of 60 mPa.s (Brookfield RVT at 100 rpm and 23°C).

### Example 5 (comparative) :

The procedure described in Example 4 is followed, without adding the 5.8 g and then the 6.4 g of methacryloxypropyl triisopropoxy silane. Besides, the quantity of itaconic acid added is 125,4 g.

The obtained dispersion filtered on a 36 Mesh, is characterized by a dry residue of 37.1% (1h at 105°C), a pH of 7.8, a content of precoagulum lower than 200 ppm on a 275 Mesh net and a viscosity of 45 mPa.s (Brookfield RVT at 100 rpm and 23°C).

### Characterization of the polymer films :

The polymer films obtained by drying the dispersion in suitable PTFE vessels, were subjected to physico-chemical characterization after conditioning for 7 days in a controlled environment at a relative humidity of 50% and at a temperature of 23°C.
The polymer films are evaluated for :
**• Tensile strength and elongation at break,** which are linked with the flexion endurance of the finished leather.
   The measures have been carried out with the method DIN 53455, using an ACQUATI AG8E dynamometer, with specimen of R type and a traction speed of 300 mm/min.
**• Hardness Shore A** which is straightly connected with the hand of the leather article.
   The measures have been carried out on 3 mm thick polymer films, according with the ASTM D2240 standard.
• **Yellowing** which is directly linked with the yellowing of the finished leather article.
   The yellowing has been measured straightly on 1 mm thick polymer films by measuring their colors, with a X-Rite reflectance spectrophotometer SP60 type. The color characteristics are summarized by the a and b coordinates in CIE L*a*b* color space. An a* (red-green) coordinate positive value indicates redness and a negative a* value indicates greenness. A positive b* (Yellow-blue) value indicates yellowness and a negative b* value indicates blueness.
• **Wetting** as the intercoat adhesion is straightly linked with the wettability of the leather surface, after being coated with the formulation based on the polymer dispersion, with other water based finishing treatment, second base-coat hand or top coat hand. Higher wettability of the polymer surface grants to higher intercoat adhesion.
   The wettability evaluation has been carried out by recognizing the surface wetted by a 200 µl water drop spread by a 25 µm coating bar on a 80 µm thick, and 10 cm wide, dry polymer dispersion films. The result is expressed on a scale from 1 to 5, where 5 indicates the complete wetting of the polymer film when the drop is spread immediately on all the polymer film wideness, whereas 1 means that the water drop has wetted a stripe wide almost as the initial drop.

### Characterization of the finished leather obtained :

The finishing treatment is carried out on split calfskins using a formulation based on a polymer dispersion with the following formula :

**Table 1 :**

| Constituent | Weight amounts |
|---|---|
| Polyethylene emulsion wax (30%) | 15 |
| TiO₂ dispersion (25%) | 15 |
| Dispersion of the invention | 81 |
| Polyurethane thickener (25%) | 1.25 |
| Water | 16 |

The formulation is applied by spraying, in such a way that, after drying for 10 minutes at 60°C, it gives an amount of 200-250 g/m². The leather is subsequently subjected to a printing process at a temperature of approximately 90°C, under a pressure of 300 bars and for a contact time of approximately 5 seconds. The printed leather is subsequently finished with a thin layer based on nitrocellulose.

The finished leather is evaluated for :
• **Cold crack temperature :**
   The evaluation of the cold crack temperature has been carried out according with the ISO 17233/02 method.
• **Embossing quality :**
   The quality of the printing process is evaluated by monitoring the resistance of a formulation to cracking in the printing process, the definition and the retention of the printed grain. The result is expressed on a scale from 1 to 5, where 5 indicates the complete absence of microcracks and a very good retention of the impression, whereas 1 means a completely cracked finish and/or the absence of retention of the impression.
• **Hand :**
   The hand of the finished leather is valued by touching the leather article after it has been embossed and "drummed" for 12 hours. The result is expressed on a scale from 1 to 5, where 5 indicates that the article still retain the hand and the softness of the natural leather, whereas 1 means a more stiff finished article with an heavy plastic hand.
• **Flexion endurance (Bally) at room temperature and in some case at low temperature :**
   Use is made, in determining the dry flex behavior of leathers finished with the formulations obtained from the polymer dispersions of the invention, of a Bally flexometer according to the process based on the IUF 20 standard of the International Union of Leather Technologists and Chemists Societies. The test specimens (65 x 40 mm) are subjected to bending movements and examined after a certain number of cycles. The test is interrupted at the number of cycles where 10 or more cracks have appeared in the finish. Even though the extent of the damage depends on the type of leather used in the test, a resistance equal to approximately 10 000 bending movements is regarded as acceptable.
• **Scrub endurance (VESLIC) at room temperature :**
   The Veslic C4500 method is used to determine the wet scrub resistances of the finished leathers. Dry leather test specimens with dimensions of 115*38 mm are abraded with a moist felt wad loaded with a pressure of 1 kg/cm². The number of cycles necessary to transfer a slight coloring to the wad is recorded.

**Table 2 :**

| Sample | Polymer Films Shore A Hardness | Yellowing (b) | Tensile Strenght at Break (MPa) | Elongation at Break (%) |
|---|---|---|---|---|
| Example 1 (Invention) | 31 | 3.60 | 5.0 | 680 |
| Example 2 (Comparative) | 17 | 4.13 | 1.5 | 730 |
| Example 3 (Comparative) | 28 | 5.27 | 3.5 | 740 |

**Table 3 :**

| Sample | Flexion Endurance at 23°C (Bally) (N° of cycles) | Scrub Endurance at 23°C (Veslic) (N° of cycles) | Cold Crack Temperature (°C) | Embossing Quality | Hand |
|---|---|---|---|---|---|
| Example 1 (Invention) | >100000 | 500 | -15 | +++++ | ++++ |
| Example 2 (Comparative) | >100000 | 200 | -15 | + | ++++ |
| Example 3 (Comparative) | >100000 | 300 | -15 | + | +++ |

**Table 4 :**

| Sample | Polymer Films Hardness Shore A | Wetting | Tensile Strenght at Break (MPa) | Elongation at Break (%) |
|---|---|---|---|---|
| Example 4 (Invention) | 43 | 5 | 5.0 | 670 |
| Example 5 (Comparative) | 50 | 4 | 4.6 | 545 |

**Table 5 :**

| Sample | Flexion Endurance at 23°C (Bally) (N° of cycles) | Flexion Endurance at -35°C (Bally) (N° of cycles) | Cold Crack Temperature (°C) | Embossing Quality |
|---|---|---|---|---|
| Example 4 (Invention) | 220000 | 15000 | -35 | +++++ |
| Example 5 (Comparative) | 140000 | 12000 | -35 | + |

## Claims

1. An aqueous polymeric dispersion **characterized in that** it comprises polymeric particles bearing silane and carboxylic groups and optionally phosphated groups, the said carboxylic groups being present either in the form of acid or of its salts with a monovalent cation, the said polymer particles being crosslinked by at least one multivalent metal compound selected from multivalent metal oxides, hydroxides or salts or complexes, and **in that** the Tg of the said polymer is not higher than 0°C, the said carboxylic groups of the said polymer particles deriving from at least one ethylenically unsaturated monomer or oligomer bearing at least one carboxylic acid group or its corresponding anhydride or salt with a monovalent cation, and being present in the monomeric mixture at a weight ratio of 0.5 to 10 parts for 100 parts of the total amount of monomers, the said multivalent metal oxide, hydroxide or its salt or complex, being added in an amount corresponding to a molar ratio multivalent metal / total equivalent acid from carboxylic and possibly phosphated groups from 0.05 to 2.00.

2. A dispersion according to claim 1 **characterized in that** the said polymer has a Tg not higher than -10°C.

3. A dispersion according to claims 1 or 2 **characterized in that** the said polymer have a core / shell structure.

4. A dispersion according to anyone of claims 1 to 3 **characterized in that** the said polymer particles further bear a phosphated group selected from phosphates or phosphonates or phosphinates.

5. A dispersion according to anyone of claims 1 to 4 **characterized in that** the said silane group is selected from alkoxysilanes.

6. A dispersion according to anyone of claims 1 to 5 **characterized in that** the said silane groups are issued from at least one α,β-ethylenically unsaturated monomer or oligomer further bearing at least one silane group, the ethylenic unsaturation being selected from : acrylic, vinylic, allylic.

7. A dispersion according to claims 5 or 6 **characterized in that** the said monomer or oligomer bearing at least one silane group is of the following general formula:
CH₂=C(R)-Si(OR')ₙR"ₘ or CH₂=C(R)-CO-O-R"-Si(OR')ₙR"ₘ
where :
n is an integer equal to 2 or 3,
m is an integer equal to 0 or 1,
m+n=3,
R = H or CH₃,
R' = C₁-C₁₀ and preferably C₂-C₅ alkyl group.
R" = C₁-C₁₀ and preferably C₂-C₅ alkyl or alkylene group, depending on its position.

8. A dispersion according to anyone of claims 5 to 7 **characterized in that** the said monomer or oligomer bearing silane groups is present at a weight ratio of 0.05 to 4 parts for 100 parts of the total amount of monomers.

9. A dispersion according to claim 1 **characterized in that** the said monomer is selected from : methacrylic and acrylic acid, fumaric and maleic acid, itaconic acid, crotonic acid, methyl hemi-ester of itaconic acid, methyl hemi-ester of fumaric acid, butyl hemi-ester of fumaric acid or their corresponding salts with monovalent cations or where possible their corresponding anhydrides.

10. A dispersion according to claim 4 **characterized in that** the said phosphated groups are issued from at least one ethylenically unsaturated monomer or oligomer bearing at least one phosphate or phosphonate or phosphinate group.

11. A dispersion according to claim 10 **characterized in that** the said ethylenically unsaturated monomer or oligomer bearing at least one phosphated group is present in the monomeric mixture at a weight ratio of 0.1 to 5 parts for 100 parts of the total amount of monomers.

12. A dispersion according to claim 3 **characterized in that** the core has a Tg from -60°C to -20°C and that the shell has a Tg from 50 to 150°C.

13. A dispersion according to anyone of claims 1 to 12 **characterized in that** the said dispersion is obtained by emulsion polymerization of a monomeric mixture comprising additionally, besides the said monomers bearing carboxylic groups as defined according to claims 1 or 9, and the said monomers bearing silane group as defined in anyone of claims 5 to 8, and possibly the said monomers bearing phosphated group as defined according to claims 10 or 11, at least one ethylenically unsaturated monomer selected from : methacrylic esters, allylic esters, vinylic esters, vinyl aromatic monomers, (meth)acrylonitrile.

14. A dispersion according to anyone of claims 1 to 13 **characterized in that** the said dispersion is obtainable by a process comprising besides an emulsion polymerization step of the said monomeric mixture, an additional and subsequent step of cross-linking of the polymeric particles by adding at least one multivalent metal oxide, hydroxide or its salt or complex.

15. A dispersion according to anyone of claims 1 to 14 **characterized in that** the said multivalent metal is selected from zinc, calcium, magnesium, titanium, aluminium and zirconium.

16. A process for preparing dispersions according to anyone of claims 1 to 15 **characterized in that** it comprises the following steps :
i) emulsion polymerization of a monomeric mixture comprising :
a) at least one ethylenically unsaturated monomer bearing silane groups,
b) at least one ethylenically unsaturated monomer bearing at least one carboxylic group as defined according to claim 1.
ii) crosslinking of the resulting polymer particles by adding in the said emulsion of step i) at least one multivalent metal oxide, hydroxide or its salt or complex in the form of slurry or aqueous solution as defined according to claim 1.

17. A process for preparing dispersions according to any one of claims 1 to 15 **characterized in that** it comprises the following steps :
i) emulsion polymerization of a first monomeric mixture comprising :
a) at least one ethylenically unsaturated monomer bearing at least one silane group as defined according to claims 1 and 5 to 8,
b) at least one ethylenically unsaturated monomer bearing at least one carboxylic group as defined according to claims 1 or 9,
ii) addition and emulsion polymerization of a second monomeric mixture, different in composition from that of step i), until having complete conversion of the total of monomers,
iii) crosslinking of the resulting polymer particles of the final emulsion resulting from step ii) by adding at least one multivalent metal oxide, hydroxide or its salt or complex as defined in claim 1 at a molar ratio of multivalent metal/total equivalent acid from carboxylic and possibly phosphated groups from 0.05 to 2.00.

18. A coating composition for leather treatment **characterized in that** it comprises at least one dispersion as defined according to any one of claims 1 to 15 or obtainable by a process as defined according to claims 16 or 17.

19. A composition according to claim 18 **characterized in that** it is a base coat composition for embossed leather.

20. A composition according to anyone of claims 18 or 19 **characterized in that** it is suitable for a treatment of leather with cold crack resistance at a temperature lower than -10°C.

21. Use of the dispersion as defined in anyone of claims 1 to 15 or obtainable by a process as defined according to claims 16 or 17 for the treatment of leather.

22. Leather **characterized in that** it is treated with at least one composition of treatment as defined according to anyone of claims 18 to 20 or by use as defined according to claim 21.

## Patentansprüche

1. Wäßrige Polymerdispersion, **dadurch gekennzeichnet, daß** sie Polymerteilchen mit Silan- und Carboxylgruppen und gegebenenfalls phosphatierten Gruppen enthält, wobei die Carboxylgruppen entweder in Form von Säure oder von Salzen davon mit einem einwertigen Kation vorliegen, die Polymerteilchen durch mindestens eine mehrwertige Metallverbindung, ausgewählt unter mehrwertigen Metalloxiden, mehrwertigen Metallhydroxiden oder Salzen oder Komplexen, vernetzt sind, und daß die Tg des Polymers höchstens 0°C beträgt, wobei sich die Carboxylgruppen der Polymerteilchen von mindestens einem ethylenisch ungesättigten Monomer oder Oligomer mit mindestens einer Carbonsäuregruppe oder dem entsprechenden Anhydrid oder Salz davon mit einem einwertigen Kation ableiten und in der Monomerenmischung in einem Gewichtsverhältnis von 0,5 bis 10 Teilen auf 100 Teile der Monomerengesamtmenge vorliegen, wobei das mehrwertige Metalloxid, das mehrwertige Metallhydroxid oder das Salz oder der Komplex davon in einer Menge zugesetzt ist, die einem Molverhältnis von mehrwertigem Metall/Gesamtäquivalente Säure von Carboxylgruppen und gegebenenfalls phosphatierten Gruppen 0,05 bis 2,00 entspricht.

2. Dispersion nach Anspruch 1, **dadurch gekennzeichnet, daß** das Polymer eine Tg von höchstens -10°C aufweist.

3. Dispersion nach Anspruch 1 oder 2, **dadurch gekennzeichnet, daß** das Polymere eine Kern/Schale-Struktur aufweist.

4. Dispersion nach einem der Ansprüche 1 bis 3, **dadurch gekennzeichnet, daß** die Polymerteilchen ferner eine unter Phosphaten oder Phosphonaten oder Phosphinaten ausgewählte phosphatierte Gruppe tragen.

5. Dispersion nach einem der Ansprüche 1 bis 4, **dadurch gekennzeichnet, daß** die Silangruppe unter Alkoxysilanen ausgewählt ist.

6. Dispersion nach einem der Ansprüche 1 bis 5, **dadurch gekennzeichnet, daß** die Silangruppen aus mindestens einem α,β-ethylenisch ungesättigten Monomer oder Oligomer, das ferner mindestens eine Silangruppe trägt, hervorgehen, wobei die ethylenische Ungesättigtheit unter Acryl, Vinyl und Allyl ausgewählt ist.

7. Dispersion nach den Ansprüchen 5 oder 6, **dadurch gekennzeichnet, daß** das Monomer oder Oligomer mit mindestens einer Silangruppe die folgende allgemeine Formel aufweist:
CH₂=C(R)-Si(OR')ₙR''ₘ oder CH₂=C(R)-CO-O-R''-Si(OR')ₙR''ₘ
worin:
n für eine ganze Zahl mit einem Wert von 2 oder 3 steht,
m für eine ganze Zahl mit einem Wert von 0 oder 1 steht,
m + n = 3,
R = H oder CH₃,
R' = C₁-C₁₀- und vorzugsweise C₂-C₅-Alkylgruppe
R'' = C₁-C₁₀- und vorzugsweise C₂-C₅-Alkyl- bzw. -Alkylengruppe, je nach Position.

8. Dispersion nach einem der Ansprüche 5 bis 7, **dadurch gekennzeichnet, daß** das Monomer oder Oligomer mit Silangruppen in einem Gewichtsverhältnis von 0,05 bis 4 Teilen auf 100 Teile der Monomerengesamtmenge vorliegt.

9. Dispersion nach Anspruch 1, **dadurch gekennzeichnet, daß** das Monomer unter Methacrylsäure und Acrylsäure, Fumarsäure und Maleinsäure, Itaconsäure, Crotonsäure, dem Metyhlhalbester von Itaconsäure, dem Methylhalbester von Fumarsäure, dem Butylhalbester von Fumarsäure oder den entsprechenden Salzen davon mit einwertigen Kationen oder, sofern möglich, den entsprechenden Anhydriden davon ausgewählt ist.

10. Dispersion nach Anspruch 4, **dadurch gekennzeichnet, daß** die phosphatierten Gruppen aus mindestens einem ethylenisch ungesättigten Monomer oder Oligomer mit mindestens einer Phosphat- oder Phosphonat- oder Phosphinatgruppe hervorgehen.

11. Dispersion nach Anspruch 10, **dadurch gekennzeichnet, daß** das ethylenisch ungesättigte Monomer oder Oligomer mit mindestens einer phosphatierten Gruppe in der Monomerenmischung in einem Gewichtsverhältnis von 0,1 bis 5 Teilen auf 100 Teile der Monomerengesamtmenge vorliegt.

12. Dispersion nach Anspruch 3, **dadurch gekennzeichnet, daß** der Kern eine Tg von -60°C bis -20°C aufweist und die Schale eine Tg von 50 bis 150°C aufweist.

13. Dispersion nach einem der Ansprüche 1 bis 12, **dadurch gekennzeichnet, daß** die Dispersion durch Emulsionspolymerisation einer Monomerenmischung erhalten wird, die neben den Monomeren mit Carboxylgruppen gemäß den Ansprüchen 1 oder 9 und den Monomeren mit Silangruppe gemäß den Ansprüchen 5 bis 8 und gegebenenfalls den Monomeren mit phosphatierter Gruppe gemäß den Ansprüchen 10 oder 11 zusätzlich mindestens ein unter Metharylsäureestern, Allylestern, Vinylestern, vinylaromatischen Monomeren und (Meth)-acrylnitril ausgewähltes ethylenisch ungesättigtes Monomer enthält.

14. Dispersion nach einem der Ansprüche 1 bis 13, **dadurch gekennzeichnet, daß** sie nach einem Verfahren erhältlich ist, das neben einem Schritt der Emulsionspolymerisation der Monomerenmischung einen zusätzlichen und nachfolgenden Schritt der Vernetzung der Polymerteilchen durch Zugabe mindestens eines mehrwertigen Metalloxids, mehrwertigen Metallhydroxids oder Salzes oder Komplexes davon umfaßt.

15. Dispersion nach einem der Ansprüche 1 bis 14, **dadurch gekennzeichnet, daß** das mehrwertige Metall unter Zink, Calcium, Magnesium, Titan, Aluminium und Zirconium ausgewählt ist.

16. Verfahren zur Herstellung von Dispersionen nach einem der Ansprüche 1 bis 15, **dadurch gekennzeichnet, daß** es die folgenden Schritte umfaßt:
i) Emulsionspolymerisation einer Monomerenmischung, enthaltend:
a) mindestens ein ethylenisch ungesättigtes Monomer mit Silangruppen,
b) mindestens ein ethylenisch ungesättigtes Monomer mit mindestens einer Carboxylgruppe gemäß Anspruch 1,
ii) Vernetzung der erhaltenen Polymerteilchen durch Zugabe mindestens eines mehrwertigen Metalloxids, mehrwertigen Metallhydroxids oder Salzes oder Komplexes davon in Form einer Aufschlämmung oder wäßrigen Lösung gemäß Anspruch 1 zu der Emulsion aus Schritt i).

17. Verfahren zur Herstellung von Dispersionen nach einem der Ansprüche 1 bis 15, **dadurch gekennzeichnet, daß** es die folgenden Schritte umfaßt:
i) Emulsionspolymerisation einer ersten Monomerenmischung, enthaltend:
a) mindestens ein ethylenisch ungesättigtes Monomer mit mindestens einer Silangruppe gemäß den Ansprüchen 1 und 5 bis 8,
b) mindestens ein ethylenisch ungesättigtes Monomer mit mindestens einer Carboxylgruppe gemäß den Ansprüchen 1 oder 9,
ii) Zugabe und Emulsionspolymerisation einer zweiten Monomerenmischung, deren Zusammensetzung sich von derjenigen aus Schritt i) unterscheidet, bis zur vollständigen Umwandlung der Gesamtheit der Monomere,
ii) Vernetzung der erhaltenen Polymerteilchen der aus Schritt ii) erhaltenen fertigen Emulsion durch Zugabe mindestens eines mehrwertigen Metalloxids, mehrwertigen Metallhydroxids oder Salzes oder Komplexes davon gemäß Anspruch 1 in einem Molverhältnis von mehrwertigem Metall/Gesamtäquivalente Säure von Carboxylgruppen und gegebenenfalls phosphatierten Gruppen von 0,05 bis 2,00.

18. Beschichtungszusammensetzung für die Lederbehandlung, **dadurch gekennzeichnet, daß** sie mindestens eine Dispersion gemäß einem der Ansprüche 1 bis 15 oder eine nach einem Verfahren gemäß einem der Ansprüche 16 oder 17 erhältliche Dispersion umfaßt.

19. Zusammensetzung nach Anspruch 18, **dadurch gekennzeichnet, daß** es sich dabei um eine Basislackzusammensetzung für geprägtes Leder handelt.

20. Zusammensetzung nach einem der Ansprüche 18 oder 19, **dadurch gekennzeichnet, daß** sie zur Behandlung von Leder mit einer Kältereißfestigkeit bei einer Temperatur von weniger als -10°C geeignet ist.

21. Verwendung der Dispersion gemäß einem der Ansprüche 1 bis 15 oder der nach einem Verfahren gemäß einem der Ansprüche 16 oder 17 erhältlichen Dispersion zur Behandlung von Leder.

22. Leder, **dadurch gekennzeichnet, daß** es mit mindestens einer Behandlungszusammensetzung gemäß einem der Ansprüche 18 bis 20 oder einer durch die Verwendung gemäß Anspruch 21 definierte Behandlungszusammensetzung behandelt wird.

## Revendications

1. Dispersion polymère aqueuse, **caractérisée en ce qu'**elle comprend des particules polymères portant des groupes silane et carboxyliques et éventuellement des groupes phosphatés, lesdits groupes carboxyliques étant présents, soit sous la forme d'acide, soit sous la forme de ses sels avec un cation monovalent, lesdites particules polymères étant réticulées par au moins un composé de métal multivalent choisi parmi des oxydes, des hydroxydes ou des sels ou des complexes de métaux multivalents, et **en ce que** la Tg dudit polymère est d'au plus 0°C, lesdits groupes carboxyliques desdites particules polymères étant dérivés d'au moins un monomère ou oligomère éthyléniquement insaturé, portant au moins un groupe acide carboxylique, ou son anhydride correspondant ou sel avec un cation monovalent, et étant présents dans le mélange de monomères à un rapport pondéral de 0,5 à 10 parties pour 100 parties de la quantité totale de monomères, ledit oxyde ou hydroxyde de métal multivalent, ou son sel ou complexe, étant ajouté en une quantité correspondant à un rapport molaire métal multivalent / acide équivalent total provenant des groupes carboxyliques et éventuellement phosphatés de 0,05 à 2,00.

2. Dispersion selon la revendication 1, **caractérisée en ce que** ledit polymère présente une Tg d'au plus -10°C.

3. Dispersion selon les revendications 1 ou 2, **caractérisée en ce que** ledit polymère présente une structure coeur / coquille.

4. Dispersion selon l'une quelconque des revendications 1 à 3, **caractérisée en ce que** lesdites particules polymères portent en outre un groupe phosphaté choisi parmi des phosphates ou des phosphonates ou des phosphinates.

5. Dispersion selon l'une quelconque des revendications 1 à 4, **caractérisée en ce que** ledit groupe silane est choisi parmi des alcoxysilanes.

6. Dispersion selon l'une quelconque des revendications 1 à 5, **caractérisée en ce que** lesdits groupes silane sont issus d'au moins un monomère ou oligomère α,β-éthyléniquement insaturé, portant en outre au moins un groupe silane, l'insaturation éthylénique étant choisie parmi : une insaturation acrylique, vinylique, allylique.

7. Dispersion selon la revendication 5 ou 6, **caractérisée en ce que** ledit monomère ou oligomère portant au moins un groupe silane est de formules générales suivantes :
CH₂=C(R)-Si(OR')ₙR"ₘ ou CH₂=C(R)-CO-O-R"-Si(OR')ₙR"ₘ
dans lesquelles :
n est un entier valant 2 ou 3,
m est un entier valant 0 ou 1,
m + n = 3,
R = H ou CH₃,
R' = un groupe alkyle en C₁-C₁₀ et de préférence en C₂-C₅,
R" = un groupe alkyle ou alkylène en C₁-C₁₀ et de préférence en C₂-C₅, en fonction de sa position.

8. Dispersion selon l'une quelconque des revendications 5 à 7, **caractérisée en ce que** ledit monomère ou oligomère portant des groupes silane est présent en un rapport pondéral de 0,05 à 4 parties pour 100 parties de la quantité totale de monomères.

9. Dispersion selon la revendication 1, **caractérisée en ce que** ledit monomère est choisi parmi : l'acide méthacrylique et l'acide acrylique, l'acide fumarique et l'acide maléique, l'acide itaconique, l'acide crotonique, l'hémi-ester méthylique de l'acide itaconique, l'hémi-ester méthylique de l'acide fumarique, l'hémi-ester butylique de l'acide fumarique ou leurs sels correspondants avec des cations monovalents ou, lorsque cela est possible, leurs anhydrides correspondants.

10. Dispersion selon la revendication 4, **caractérisée en ce que** lesdits groupes phosphatés sont issus d'au moins un monomère ou oligomère éthyléniquement insaturé, portant au moins un groupe phosphate ou phosphonate ou phosphinate.

11. Dispersion selon la revendication 10, **caractérisée en ce que** ledit monomère ou oligomère éthyléniquement insaturé, portant au moins un groupe phosphaté, est présent dans le mélange de monomères, en un rapport pondéral de 0,1 à 5 parties pour 100 parties de la quantité totale de monomères.

12. Dispersion selon la revendication 3, **caractérisée en ce que** le coeur présente une Tg de -60°C à -20°C et **en ce que** la coquille présente une Tg de 50 à 150°C.

13. Dispersion selon l'une quelconque des revendications 1 à 12, **caractérisée en ce que** ladite dispersion est obtenue par la polymérisation en émulsion d'un mélange de monomères comprenant en outre, en plus desdits monomères portant des groupes carboxyliques tels que définis selon les revendications 1 ou 9, et desdits monomères portant un groupe silane tels que définis dans l'une quelconque des revendications 5 à 8, et éventuellement desdits monomères portant un groupe phosphaté tels que définis selon les revendications 10 ou 11, au moins un monomère éthyléniquement insaturé choisi parmi : des esters méthacryliques, des esters allyliques, des esters vinyliques, des monomères vinyle aromatiques, le (méth)acrylonitrile.

14. Dispersion selon l'une quelconque des revendications 1 à 13, **caractérisée en ce que** ladite dispersion peut être obtenue par un procédé comprenant, en plus d'une étape de polymérisation en émulsion dudit mélange de monomères, une étape supplémentaire et subséquente de réticulation des particules polymères en ajoutant au moins un oxyde ou hydroxyde de métal multivalent, ou son sel ou complexe.

15. Dispersion selon l'une quelconque des revendications 1 à 14, **caractérisée en ce que** ledit métal multivalent est choisi parmi le zinc, le calcium, le magnésium, le titane, l'aluminium et le zirconium.

16. Procédé de préparation de dispersions selon l'une quelconque des revendications 1 à 15, **caractérisé en ce qu'**il comprend les étapes suivantes :
i) la polymérisation en émulsion d'un mélange de monomères comprenant :
a) au moins un monomère éthyléniquement insaturé portant des groupes silane,
b) au moins un monomère éthyléniquement insaturé portant au moins un groupe carboxylique tel que défini selon la revendication 1,
ii) la réticulation des particules polymères résultantes en ajoutant, dans ladite émulsion de l'étape i), au moins un oxyde ou hydroxyde de métal multivalent ou son sel ou complexe sous la forme d'une bouillie ou d'une solution aqueuse, comme défini selon la revendication 1.

17. Procédé de préparation de dispersions selon l'une quelconque des revendications 1 à 15, **caractérisé en ce qu'**il comprend les étapes suivantes :
i) la polymérisation en émulsion d'un premier mélange de monomères comprenant :
a) au moins un monomère éthyléniquement insaturé portant au moins un groupe silane tel que défini selon les revendications 1 et 5 à 8,
b) au moins un monomère éthyléniquement insaturé portant au moins un groupe carboxylique tel que défini selon les revendications 1 ou 9,
ii) l'addition et la polymérisation en émulsion d'un deuxième mélange de monomères, de composition différente de celui de l'étape i), jusqu'à la conversion complète de la totalité des monomères,
iii) la réticulation des particules polymères résultantes de l'émulsion finale résultant de l'étape ii) en ajoutant au moins un oxyde ou hydroxyde de métal multivalent ou son sel ou complexe tel que défini dans la revendication 1 en un rapport molaire de métal multivalent/acide équivalent total provenant des groupes carboxyliques et éventuellement phosphatés de 0,05 à 2,00.

18. Composition de revêtement pour le traitement du cuir, **caractérisée en ce qu'**elle comprend au moins une dispersion telle que définie selon l'une quelconque des revendications 1 à 15 ou pouvant être obtenue par un procédé tel que défini selon les revendications 16 ou 17.

19. Composition selon la revendication 18, **caractérisée en ce qu'**il s'agit d'une composition de couches de fond pour du cuir imprimé.

20. Composition selon l'une quelconque des revendications 18 ou 19, **caractérisée en ce qu'**elle est appropriée pour le traitement du cuir avec une résistance à la rupture à froid à une température inférieure à -10°C.

21. Utilisation de la dispersion telle que définie dans l'une quelconque des revendications 1 à 15 ou pouvant être obtenue par un procédé tel que défini selon les revendications 16 ou 17 pour le traitement du cuir.

22. Cuir **caractérisé en ce qu'**il est traité avec au moins une composition de traitement telle que définie selon l'une quelconque des revendications 18 à 20 ou par une utilisation telle que définie selon la revendication 21.
